# EUROPÄISCHE PATENTSCHRIFT

(11) **EP 2 808 495 B1**
(45) Veröffentlichungstag und Bekanntmachung des Hinweises auf die Patenterteilung: **23.03.2016**
(21) Anmeldenummer: 13169603.1
(22) Anmeldetag: 29.05.2013
(51) Int. Cl.: F01D 17/16, F02C 9/22

(54) **Lageranordnung für eine verstellbare Leitschaufel**
Bearing arrangement for an adjustable guide blade
Agencement de palier pour une aube directrice réglable

(43) Veröffentlichungstag der Anmeldung: 03.12.2014
(73) Patentinhaber: MTU Aero Engines AG, 80995 München (DE)
(72) Erfinder: Bayer, Erwin, 85221 Dachau (DE); Hiller, Sven, 85244 Röhrmoos (DE)

(56) Entgegenhaltungen:
- EP-A2- 1 961 922
- JP-A- 2004 183 624
- US-A- 3 674 377

## Beschreibung

Die vorliegende Erfindung betrifft eine Lageranordnung für eine verstellbare Leitschaufel einer Turbomaschine, eine Leitschaufelanordnung einer Turbomaschine mit einer solchen Lageranordnung, eine Turbomaschine mit einer solchen Leitschaufelanordnung sowie ein Verfahren zum Lagern einer verstellbaren Leitschaufel einer solchen Turbomaschine.

Aus der US 8,147,187 B2 ist eine Lageranordnung für eine verstellbare Leitschaufel einer Turbomaschine mit einer oberen Lagerschale und einer unteren Lagerschale bekannt, die jeweils eine teilsphärische Innenkontur aufweisen, in der ein Lagerring angeordnet ist, der verdrehsicher auf einem Zapfen der Leitschaufel angeordnet ist.

Eine Aufgabe einer Ausführung der vorliegenden Erfindung ist es, die Lagerung einer verstellbaren Leitschaufel in einer Turbomaschine zu verbessern.

Diese Aufgabe wird durch eine Lageranordnung mit den Merkmalen des Anspruchs 1 gelöst. Anspruch 10 stellt eine Leitschaufelanordnung mit einer solchen Lageranordnung, Anspruch 11 eine Turbomaschine mit einer solchen Leitschaufelanordnung, Anspruch 12 ein Verfahren zum Lagern einer verstellbaren Leitschaufel einer solchen Turbomaschine unter Schutz. Vorteilhafte Ausführungsformen der Erfindung sind Gegenstand der Unteransprüche.

Eine Turbomaschine, insbesondere eine Gasturbine, vorzugsweise eine Flugtriebwerk-Gasturbine, nach einem Aspekt der vorliegenden Erfindung weist in einer oder mehreren Verdichter- und/oder Turbinenstufen eine verstellbare Leitschaufelanordnung mit mehreren, in Umfangsrichtung verteilten Leitschaufeln auf, die jeweils einen Zapfen aufweisen, der mit einem Schaufelblatt der Leitschaufel drehfest, insbesondere dauerhaft, verbunden, vorzugsweise integral ausgebildet ist. Durch Drehen des Zapfens, insbesondere mittels einer aktuierten Verstellvorrichtung, können die Leitschaufeln verdreht und so an Strömungsverhältnisse angepasst werden. Zur grundsätzlichen, dem Fachmann bekannten Funktionsweise und Verstellvorrichtung wird ergänzend auf die eingangs genannte US 8,147,187 B2 Bezug genommen, deren Offenbarung ausdrücklich auch in die vorliegende Beschreibung einbezogen wird.

Nach einem Aspekt der vorliegenden Erfindung durchgreifen die Zapfen der verstellbaren Leitschaufel jeweils eine Durchgangsbohrung eines ersten und eines zweiten Lagerkörpers einer Lageranordnung. Der erste Lagerkörper ist in einer Ausführung radial außen bzw. leitschaufelblattfern bzw. -abgewandt angeordnet, der zweite Lagerkörper entsprechend radial innen bzw. leitschaufelblattnah bzw. -zugewandt. Gleichermaßen kann auch der erste Lagerkörper radial innen, der zweite Lagerkörper entsprechend radial außen angeordnet sein.

In einer Ausführung sind die Lagerkörper verdrehsicher und/oder verschiebbar auf dem Zapfen angeordnet. Auch hierzu wird ergänzend auf die US 8,147,187 B2 Bezug genommen.

Die ersten und zweiten Lagerkörper sind jeweils in einer ersten bzw. zweiten Lagerschale angeordnet, die eine teilsphärische, zur Außenkontur des Lagerkörpers komplementäre Innenkontur aufweist.

Die Innenkontur einer ersten und/oder zweiten Lagerschale und/oder die Außenkontur eines ersten und/oder zweiten Lagerkörpers einer Lageranordnung nach einem Aspekt der vorliegenden Erfindung ist keramisch. Hierzu kann die Lagerschale bzw. der Lagerkörper keramisch beschichtet sein. In einer Ausführung ist die erste und/oder zweite Lagerschale und/oder der erste und/oder zweite Lagerkörper aus Keramik hergestellt.

Dies kann in einer Ausführung eine Lagerreibung reduzieren und in einer Weiterbildung eine Schmierung überflüssig machen, so dass in einer Ausführung die Lagerung trocken bzw. schmiermittelfrei ausgebildet ist bzw. verwendet wird.

In einer Ausführung weist der erste und/oder zweite Lagerkörper, wenigstens im Wesentlichen, eine sphärische Außenkontur auf bzw. ist als Voll- oder Hohlkugel ausgebildet. Vorteilhaft sind solche vollsymmetrischen Lagerkörper einfach und präzise herstellbar.

In einer Ausführung weist die Innenkontur der ersten Lagerschale an ihrem der zweiten Lagerschale zugewandten Rand einen maximalen Durchmesser auf. Zusätzlich oder alternativ kann die Innenkontur der zweiten Lagerschale an ihrem der ersten Lagerschale zugewandten Rand einen maximalen Durchmesser aufweisen. Im Gegensatz zu der Ausführung der US 8,147,187 B2, in der sich der Durchmesser zum-Rand hin reduziert, ermöglicht der divergente Rand ein einfaches Ein- und Ausführen des Lagerkörpers in die bzw. aus der Lagerschale und gestattet so insbesondere eine translatorische Bewegung des Lagerkörpers relativ zu der Lagerschale, insbesondere entlang des Zapfens.

Nach einem Aspekt der vorliegenden Erfindung ist die erste Lagerschale in einer Führung verschiebbar angeordnet, insbesondere mit Spiel oder spielfrei gleitgelagert, und durch eine Spannanordnung, insbesondere zur zweiten Lagerschale hin, vorspannbar bzw. vorgespannt. Entsprechend kann nach einem Aspekt der vorliegenden Erfindung eine Vorspannung der in einer Führung verschiebbaren ersten Lagerschale verändert werden.

Nach diesem Aspekt kann in einer Ausführung ein Spiel der Lageranordnung reduziert werden. Insbesondere hierdurch kann in einer Ausführung der vorliegenden Erfindung vorteilhaft die Dichtheit der Lageranordnung verbessert, dadurch eine Leckage von Arbeitsfluid durch die Lageranordnung reduziert und so der Wirkungsgrad der Turbomaschine verbessert werden.

Zusätzlich oder alternativ kann eine Steifigkeit der Lageranordnung eingestellt werden. Insbesondere hierdurch kann in einer Ausführung der vorliegenden Erfindung vorteilhaft die Funktionalität der Leitschaufeln verbessert und so der Wirkungsgrad der Turbomaschine verbessert werden.

In einer Ausführung weist die Spannanordnung ein Spannmittel und einen verstellbaren Spannanschlag zum variablen Komprimieren des Spannmittels auf. Entsprechend kann in einer Ausführung eine Vorspannung der in einer Führung verschiebbaren ersten Lagerschale durch Verstellen des Spannanschlags verändert werden.

Das Spannmittel kann insbesondere elastisch, hydraulisch und/oder pneumatisch ausgebildet sein. Es kann in der Führung der ersten Lagerschale angeordnet sein, wodurch in einer Ausführung der Platzbedarf reduziert und/oder der Kraftfluss verbessert werden kann. In einer Ausführung weist es eine oder mehrere parallel und/oder seriell geschaltete Federn, insbesondere Druck- und/oder Zugfedern, vorzugsweise Spiral- und/oder Tellerfedern, auf.

In einer Ausführung weist der Spannanschlag eine Mutter auf, die mit dem Zapfen der Leitschaufel verschraubbar bzw. verschraubt ist. Zusätzlich oder alternativ kann der Spannanschlag eine Scheibe aufweisen, an der sich das Spannmittel abstützt, das somit zwischen Scheibe und erster Lagerschale angeordnet sein kann. Die Mutter kann auf der dem Spannmittel gegenüberliegenden Seite der Scheibe angeordnet oder integral mit dieser ausgebildet sein.

In einer Ausführung ist die Scheibe als Deckel ausgebildet, der die Führung, vorzugsweise dicht, verschließt. Hierzu kann die Scheibe einen entsprechenden Kragenflansch aufweisen, der in der Führung gleitet oder diese von außen um- bzw. übergreift.

In einer Ausführung der vorliegenden Erfindung weist die Lageranordnung einen ersten Anschlag zum Abstützen des ersten Lagerkörpers in der ersten Lagerschale auf. Zusätzlich oder alternativ kann die Lageranordnung einen zweiten Anschlag zum Abstützen des zweiten Lagerkörpers in der zweiten Lagerschale aufweisen. Der Anschlag begrenzt in einer Ausführung ein Spiel des Lagerkörpers in der Lagerschale bzw. eine Bewegung des Lagerkörpers aus der Lagerschale heraus, insbesondere eine Verschiebung des Lagerkörpers an dem Zapfen, formschlüssig.

Der erste und zweite Anschlag können separat oder einteilig bzw. gemeinsam durch ein Bauteil ausgebildet sein. In einer Ausführung sind der erste und/oder zweite Anschlag mit dem Zapfen verschraubbar bzw. verschraubt, so dass ihre Position längs der Zapfenachse ver- bzw. einstellbar ist.

Durch den, insbesondere verstellbaren, ersten und/oder zweiten Anschlag können in einer Ausführung die Einstellmöglichkeiten der Lageranordnung verbessert werden. Hierdurch kann in einer Ausführung die Dichtheit und/oder Steifigkeit der Lageranordnung und/oder eine radiale Position der Leitschaufel verändert und so der Wirkungsgrad der Turbomaschine verbessert werden. Entsprechend wird nach einer Ausführung der vorliegenden Erfindung der erste und/oder zweite Anschlag verstellt.

In einer Ausführung ist die zweite Lagerschale an der Führung dreh- und/oder axialsicher befestigt. Sie kann in einer Weiterbildung lösbar oder dauerhaft an der Führung befestigt sein. Eine lösbare Befestigung kann einen Austausch erlauben und/oder die Montage vereinfachen, eine dauerhafte Befestigung in einer Ausführung die Lebensdauer und/oder Präzision der Lagerung erhöhen. Die zweite Lagerschale kann an der Führung form-, reib- und/oder stoffschlüssig befestigt sein, insbesondere verdrehsicher in eine Aussparung der Führung eingelegt, -geschrumpft, -gelötet und/oder -geklebt.

In einer Ausführung ist die Führung dreh- und/oder axialfest mit einem Gehäuse der Turbomaschine verbunden. Sie kann in einer Weiterbildung separat, insbesondere als Lagergehäuse, ausgebildet, und lösbar oder dauerhaft mit dem Gehäuse verbunden sein, insbesondere form-, reib- und/oder stoffschlüssig, vorzugsweise eingelegt, - geschrumpft, -gelötet und/oder -geklebt. Gleichermaßen kann sie integral mit dem Gehäuse ausgebildet sein, insbesondere als Bohrung.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

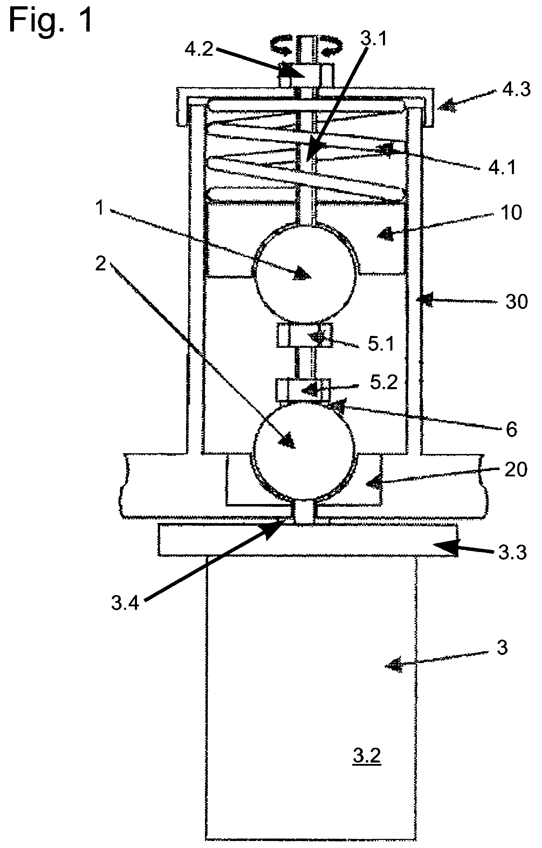

- Fig. 1:: eine Lageranordnung einer Leitschaufelanordnung einer Turbomaschine nach einer Ausführung der vorliegenden Erfindung in einem Längsschnitt.

Fig. 1 zeigt eine Lageranordnung einer Leitschaufelanordnung einer Flugtriebwerk-Gasturbine nach einer Ausführung der vorliegenden Erfindung in einem Längsschnitt.

Die Leitschaufelanordnung weist mehrere, in Umfangsrichtung verteilte Leitschaufeln 3 auf, von denen in Fig. 1 eine in einem Längsschnitt gezeigt ist. Diese weist einen Zapfen 3.1 auf, der mit einem Schaufelblatt 3.2 der Leitschaufel integral ausgebildet ist. Durch ein in Fig. 1 durch Bewegungspfeile angedeutetes Drehen des Zapfens kann die Leitschaufel verdreht und so an Strömungsverhältnisse angepasst werden.

Der Zapfen durchgreift Durchgangsbohrungen eines ersten Lagerkörpers 1 und eines zweiten Lagerkörpers 2 der Lageranordnung. Der erste Lagerkörper 1 ist radial außen (oben in Fig. 1) bzw. leitschaufelblattfern bzw. -abgewandt angeordnet, der zweite Lagerkörper 2 entsprechend radial innen. Die Lagerkörper 1, 2 sind als identische Kugeln ausgebildet, was die Herstellung, Bevorratung und Montage erleichtert, und verschiebbar auf dem Zapfen angeordnet. Sie können formschlüssig verdrehgesichert sein, indem die Durchgangsbohrungen verdrehsicher ausgebildet sind, insbesondere nicht rotationssymmetrisch, sondern beispielsweise eine oder mehrere gerade Abschnitte aufweisen, beispielsweise rechteckförmig ausgebildet sind.

Der erste Lagerkörper 1 ist in einer ersten Lagerschale 10 angeordnet, die eine halbsphärische, zur Außenkontur des ersten Lagerkörpers komplementäre Innenkontur aufweist. Der zweite Lagerkörper 2 ist in einer zweiten Lagerschale 20 angeordnet, die eine halbsphärische, zur Außenkontur des zweiten Lagerkörpers komplementäre Innenkontur aufweist. Die Innenkontur der ersten Lagerschale weist an ihrem der zweiten Lagerschale zugewandten Rand (unten in Fig. 1) ihren maximalen Durchmesser auf, ebenso weist die Innenkontur der zweiten Lagerschale an ihrem der ersten Lagerschale zugewandten Rand (oben in Fig. 1) ihren maximalen Durchmesser auf.

Die erste und zweite Lagerschale und der erste und/oder zweite Lagerkörper sind aus Keramik hergestellt.

Die erste Lagerschale 10 ist in einer Führung 30 verschiebbar angeordnet und durch eine Spannanordnung zur zweiten Lagerschale 20 hin vorgespannt. Die Spannanordnung weist ein elastisches Spannmittel in Form einer Druck-Spiralfeder 4.1, die in der Führung 30 der ersten Lagerschale angeordnet ist, und einen verstellbaren Spannanschlag zum variablen Komprimieren des Spannmittels auf. Der Spannanschlag weist eine Mutter 4.2, die mit dem Zapfen 3.1 der Leitschaufel verschraubt ist, und eine Scheibe 4.3 auf, an der sich die Feder 4.1 abstützt, und die Scheibe als Deckel ausgebildet ist, der die Führung 30 verschließt und diese hierzu von außen um- bzw. übergreift.

Die Lageranordnung weist einen ersten Anschlag in Form einer Justiermutter 5.1 zum Abstützen des ersten Lagerkörpers 1 in der ersten Lagerschale 10 und einen zweiten Anschlag in Form einer weiteren Justiermutter 5.2 zum Abstützen des zweiten Lagerkörpers 2 in der zweiten Lagerschale 20 auf. In einer nicht dargestellten Abwandlung können der erste und zweite Anschlag auch einteilig bzw. gemeinsam durch ein Bauteil in Form eines Distanzstücks ausgebildet sein.

Der erste und zweite Anschlag 5.1, 5.2 sind mit dem Zapfen 3.1 verschraubt, so dass ihre Position längs der Zapfenachse (vertikal in Fig. 1) ver- bzw. einstellbar ist.

Die zweite Lagerschale 20 ist an der Führung 30 dreh- und axialsicher befestigt und hierzu formschlüssig in eine Aussparung der Führung eingelegt, und in diese eingeschrumpft, -gelötet oder -geklebt.

Die Führung ist im Ausführungsbeispiel separat als Lagergehäuse 30 ausgebildet, und mit einem Gehäuse der Gasturbine (nicht dargestellt) verbunden. In einer nicht dargestellten Abwandlung ist die Führung 30 integral mit dem Gehäuse ausgebildet.

Durch Verstellen des zweiten Anschlags 5.2 kann die Position der Leitschaufel 3 in radialer Richtung der Turbomaschine bzw. in Achsrichtung ihres Zapfens 3.1 eingestellt werden. Durch Verstellen der Mutter 4.2 und damit des Deckels 4.3 kann die Vorspannung der Feder 4.1 verändert und so Lagerspiel und -steifigkeit eingestellt werden. Durch Verstellen des ersten Anschlags 5.1 kann dabei axiales Spiel zwischen dem Deckel 4.3 und der Führung 30 dargestellt werden. Man erkennt, dass auch bei einer einstückigen Ausbildung des ersten und zweiten Anschlags durch ein gemeinsames Distanzstück diese Funktionalität ermöglicht wird, solang dabei axiales Spiel zwischen dem Deckel 4.3 und der Führung 30 verbleibt. Selbst ohne Anschläge 5.1, 5.2, d.h. bei einander berührenden Kugeln 1, 2 kann durch die Feder 4.1 Lagerspiel und -steifigkeit eingestellt werden. Durch die dargestellte vorteilhafte Weiterbildung erweitern sich jedoch die Einstellmöglichkeiten.

Zwischen einer Plattform 3.3 der Leitschaufel und dem Gehäuse bzw. der Führung 30 kann, wie in Fig. 1 dargestellt, eine Distanzhülse 3.4 bzw. -scheibe angeordnet sein, die zudem den Zapfen 3.1 abdichten kann. Zusätzlich oder alternativ kann ein Dichtelement 6 zwischen einem Anschlag und dem durch ihn abgestützten Lagerkörper angeordnet sein, wie in der Ausführung der Fig. 1 zwischen dem zweiten Anschlag 5.2 und der zweiten Kugel 2.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: erster Lagerkörper
- 2: zweiter Lagerkörper
- 3: Leitschaufel
- 3.1: Zapfen
- 3.2: Schaufelblatt
- 3.3: Plattform
- 3.4: Scheibe
- 4.1: Feder (Spannmittel)
- 4.2: Mutter (Spannanschlag)
- 4.3: Deckel (Spannanschlag)
- 5.1: erster Anschlag
- 5.2: zweiter Anschlag
- 6: Dichtelement
- 10: erste Lagerschale
- 20: zweite Lagerschale
- 30: Lagergehäuse (Führung)

## Patentansprüche

1. Lageranordnung für eine verstellbare Leitschaufel (3) einer Turbomaschine, umfassend:
eine erste Lagerschale (10) mit einer teilsphärischen Innenkontur, in der ein erster Lagerkörper (1) mit einer komplementären Außenkontur angeordnet ist, der eine, insbesondere verdrehsichere, Durchgangsbohrung für einen Zapfen (3.1) der Leitschaufel aufweist;
eine zweite Lagerschale (20) mit einer teilsphärischen Innenkontur, in der ein zweiter Lagerkörper (2) mit einer komplementären Außenkontur angeordnet ist,
der eine, insbesondere verdrehsichere, Durchgangsbohrung für den Zapfen der Leitschaufel aufweist;
**gekennzeichnet durch** eine Spannanordnung (4.1 - 4.3) zum Vorspannen der in einer Führung (30) verschiebbaren erste Lagerschale.

2. Lageranordnung nach dem vorhergehenden Anspruch, **dadurch gekennzeichnet, dass** die Spannanordnung ein, insbesondere elastisches, Spannmittel (4.1) und einen verstellbaren Spannanschlag (4.2, 4.3) zum variablen Komprimieren des Spannmittels aufweist.

3. Lageranordnung nach dem vorhergehenden Anspruch, **dadurch gekennzeichnet, dass** das Spannmittel in der Führung der ersten Lagerschale angeordnet ist.

4. Lageranordnung nach einem der vorhergehenden Ansprüche, **dadurch gekennzeichnet, dass** der Spannanschlag eine Mutter (4.2) aufweist, die mit dem Zapfen der Leitschaufel verschraubbar ist.

5. Lageranordnung nach einem der vorhergehenden Ansprüche, **gekennzeichnet durch** einen, insbesondere verstellbaren, ersten Anschlag (5.1) zum Abstützen des ersten Lagerkörpers in der ersten Lagerschale und/oder einen, insbesondere verstellbaren, zweiten Anschlag (5.2) zum Abstützen des zweiten Lagerkörpers in der zweiten Lagerschale.

6. Lageranordnung nach einem der vorhergehenden Ansprüche, **dadurch gekennzeichnet, dass** die Innenkontur der ersten und/oder zweiten Lagerschale an ihrem der anderen Lagerschale zugewandten Rand einen maximalen Durchmesser aufweist.

7. Lageranordnung nach einem der vorhergehenden Ansprüche, **dadurch gekennzeichnet, dass** der erste und/oder zweite Lagerkörper, wenigstens im Wesentlichen, eine sphärische Außenkontur aufweist.

8. Lageranordnung nach einem der vorhergehenden Ansprüche, **dadurch gekennzeichnet, dass** die zweite Lagerschale an der Führung, insbesondere dauerhaft, befestigt ist.

9. Lageranordnung nach einem der vorhergehenden Ansprüche, **dadurch gekennzeichnet, dass** die Innenkontur der ersten und/oder zweiten Lagerschale und/oder die Außenkontur des ersten und/oder zweiten Lagerkörpers keramisch ist.

10. Leitschaufelanordnung einer Turbomaschine, mit wenigstens einer verstellbaren Leitschaufel (3), **dadurch gekennzeichnet, dass** ein Zapfen (3.1) der Leitschaufel die Durchgangsbohrungen des ersten und zweiten Lagerkörpers einer Lageranordnung nach einem der vorhergehenden Ansprüche durchgreift.

11. Turbomaschine, insbesondere Gasturbine, **gekennzeichnet durch** eine verstellbare Leitschaufelanordnung nach dem vorhergehenden Anspruch, deren Führung (30) fest, insbesondere dauerhaft, mit einem Gehäuse der Turbomaschine verbunden, insbesondere separat oder integral mit diesem ausgebildet, ist.

12. Verfahren zum Lagern einer verstellbaren Leitschaufel (3) einer Turbomaschine nach dem vorhergehenden Anspruch, **dadurch gekennzeichnet, dass** eine Vorspannung der in der Führung (30) verschiebbaren ersten Lagerschale, insbesondere durch Verstellen des Spannanschlags (4.2, 4.3), verändert wird.

13. Verfahren nach dem vorhergehenden Anspruch, **dadurch gekennzeichnet, dass** der Anschlag (5.1, 5.2) zum Abstützen des ersten und/oder zweiten Lagerkörpers verstellt wird.

## Claims

1. A bearing arrangement for an adjustable guide blade (3) of a turbo-engine, comprising :
a first bearing shell (10) with a partially spherical inner contour in which there is arranged a first bearing body (1) with a complementary outer contour and
a through-bore, in particular a torsionally secure through-bore, for a pin (3.1) of the guide blade;
a second bearing shell (20) with a partially spherical inner contour in which there is arranged a second bearing body (2) with a complementary outer contour and
a through-bore, in particular a torsionally secure through-bore, for the pin of the guide blade;
**characterised by** a tensioning arrangement (4.1-4.3) for pre-tensioning the first bearing shell which can be displaced in a guide (30).

2. A bearing arrangement according to the preceding claim, **characterised in that** the tensioning arrangement has a tensioning means (4.1), in particular an elastic tensioning means (4.1), and an adjustable tensioning stop (4.2, 4.3) for variable compression of the tensioning means.

3. A bearing arrangement according to the preceding claim, **characterised in that** the tensioning means is arranged in the guide of the first bearing shell.

4. A bearing arrangement according to one of the preceding claims, **characterised in that** the tensioning stop has a nut (4.2) which can be screwed together with the pin of the guide blade.

5. A bearing arrangement according to one of the preceding claims, **characterised by** a first stop (5.1), in particular an adjustable first stop (5.1), for staying the first bearing body in the first bearing shell and/or a second stop (5.2), in particular an adjustable second stop (5.2), for staying the second bearing body in the second bearing shell.

6. A bearing arrangement according to one of the preceding claims, **characterised in that** the inner contour of the first and/or second bearing shell has a maximum diameter at its edge facing the other bearing shell.

7. A bearing arrangement according to one of the preceding claims, **characterised in that** the first and/or second bearing body have/has, at least substantially, a spherical outer contour.

8. A bearing arrangement according to one of the preceding claims, **characterised in that** the second bearing shell is secured to the guide, in particular permanently.

9. A bearing arrangement according to one of the preceding claims, **characterised in that** the inner contour of the first and/or second bearing shell and/or the outer contour of the first and/or second bearing body are/is ceramic.

10. A guide-blade arrangement of a turbo-engine, having at least one adjustable guide blade (3), **characterised in that** a pin (3.1) of the guide blade engages through the through-bores of the first and second bearing body of a bearing arrangement according to one of the preceding claims.

11. A turbo-engine, in particular a gas turbine, **characterised by** an adjustable guide-blade arrangement according to the preceding claim, whose guide (30) is fixedly, in particular permanently, connected to a housing of the turbo-engine, in particular is formed separately or integrally therewith.

12. A method for mounting an adjustable guide blade (3) of a turbo-engine according to the preceding claim, **characterised in that** a pre-tensioning of the first bearing shell, which is displaceable in the guide (30), is changed, in particular by adjusting the tensioning stop (4.2, 4.3).

13. A method according to the preceding claim, **characterised in that** the stop (5.1, 5.2) is adjusted to stay the first and/or second bearing body.

## Revendications

1. Dispositif de palier pour une aube directrice (3) réglable d'une turbomachine, comprenant :
un premier coussinet (10) avec un contour intérieur partiellement sphérique, où est disposé un premier corps de palier (1) avec un contour extérieur complémentaire, lequel présente un alésage traversant notamment bloqué en rotation pour un maneton (3.1) de l'aube directrice ;
un deuxième coussinet (20) avec un contour intérieur partiellement sphérique, où est disposé un deuxième corps de palier (2) avec un contour extérieur complémentaire, lequel présente un alésage traversant notamment bloqué en rotation pour le maneton de l'aube directrice ;
**caractérisé par** un dispositif de serrage (4.1 - 4.3) pour la pré-contrainte du premier coussinet déplaçable dans un guidage (30).

2. Dispositif de palier selon la revendication précédente, **caractérisé en ce que** le dispositif de serrage comporte un moyen de serrage (4.1), notamment élastique, et une butée de serrage (4.2, 4.3) réglable pour la compression variable du moyen de serrage.

3. Dispositif de palier selon la revendication précédente, **caractérisé en ce que** le moyen de serrage est disposé dans le guidage du premier coussinet.

4. Dispositif de palier selon l'une des revendications précédentes, **caractérisé en ce que** la butée de serrage comporte un écrou (4.2) vissable avec le maneton de l'aube directrice.

5. Dispositif de palier selon l'une des revendications précédentes, **caractérisé par** une première butée (5.1), notamment réglable, pour l'appui du premier corps de palier dans le premier coussinet et/ou par une deuxième butée (5.2), notamment réglable, pour l'appui du deuxième corps de palier dans le deuxième coussinet.

6. Dispositif de palier selon l'une des revendications précédentes, **caractérisé en ce que** le contour intérieur du premier et/ou du deuxième coussinet présente un diamètre maximal sur son bord opposé à l'autre coussinet.

7. Dispositif de palier selon l'une des revendications précédentes, **caractérisé en ce que** le premier et/ou le deuxième corps de palier présente un contour extérieur au moins sensiblement sphérique.

8. Dispositif de palier selon l'une des revendications précédentes, **caractérisé en ce que** le deuxième coussinet est fixé sur le guidage, en particulier durablement.

9. Dispositif de palier selon l'une des revendications précédentes, **caractérisé en ce que** le contour intérieur du premier et/ou du deuxième coussinet et/ou le contour extérieur du premier et/ou du deuxième corps de palier sont en céramique.

10. Dispositif d'aube directrice d'une turbomachine, avec au moins une aube directrice (3) réglable, **caractérisé en ce qu'**un maneton (3.1) de l'aube directrice passe dans les alésages traversants du premier et du deuxième corps de palier d'un dispositif de palier selon l'une des revendications précédentes.

11. Turbomachine, en particulier turbine à gaz, **caractérisée par** un dispositif d'aube directrice réglable selon la revendication précédente, dont le guidage (30) est fixement, en particulier durablement, raccordé à un carter de la turbomachine, et en particulier réalisé séparément de celui-ci ou d'un seul tenant avec lui.

12. Procédé de montage sur palier d'une aube directrice (3) réglable d'une turbomachine selon la revendication précédente, **caractérisé en ce qu'**une précontrainte du premier coussinet déplaçable dans le guidage (30) est modifiée, en particulier par réglage de la butée de serrage (4.2, 4.3).

13. Procédé selon la revendication précédente, **caractérisé en ce que** la butée (5.1, 5.2) est réglée pour l'appui du premier et/ou du deuxième corps de palier.
